# EUROPEAN PATENT SPECIFICATION

(11) **EP 0 342 792 B1**
(45) Date of publication and mention of the grant of the patent: **10.03.1993**
(21) Application number: 89303743.2
(22) Date of filing: 14.04.1989
(51) Int. Cl.: C08F 8/34

(54) **A process for the preparation of a polybutene having a thioether function**
Verfahren zur Herstellung von Thioether-Funktion enthaltendem Polybuten
Procédé de préparation de polybutène à fonction thioéther

(30) Priority: 26.04.1988 FR 8805725
(43) Date of publication of application: 23.11.1989
(73) Proprietor: BP Chemicals Limited, London, SW1W 0SU (GB)
(72) Inventor: Blackborow, John Richard, F-13117 Lavera (FR); Boileau, Sylvie, F-75013 Paris (FR); Mazeaud, Brigitte, F-75005 Paris (FR)
(74) Representative: Hymers, Ronald Robson

(56) References cited:
- EP-A- 0 249 102
- BE-A- 656 258
- FR-A- 1 551 894
- GB-A- 2 016 479
- GB-A- 2 110 706

## Description

The present invention relates to a process for the preparation of a polybutene having a thioether function by an addition reaction between an organic thiol and a polybutene containing carbon-carbon double bonds, and to polybutene having a thioether function obtainable by the process. The polybutene having a thioether function is particularly intended to be employed in compositions for lubricants, detergents, emulsifiers, pesticides or agents which modify glass or the surface of glass.

British Patent Application No. 2 110 706 has disclosed a process for preparing polyisobutylene elastomers suitable for sealants, coverings or films. The process comprises a first stage for preparing an isobutylene and triene copolymer containing multiple carbon-carbon double bonds per molecule, particularly pendant groups of vinyl type, followed by a second stage consisting in a silylation of the copolymer by means of an organic silicon compound which may comprise a thiol group.

In the field of lubricants a considerable demand has recently appeared to develop a fluid capable of exhibiting both a high viscosity index and a low flow point, defined as being the lowest temperature at which the fluid still flows when it is cooled without stirring under standardized conditions. Furthermore, lubricants capable of being employed at high pressure and having a low degree of evaporation are being sought. It has been found, however, that the majority of lubricants do not satisfy all these requirements and that they cannot be empolyed in a wide field of applications.

An urgent need has also appeared to develop new compositions for detergents or emulsifiers, particularly products having specially adapted detergent properties for engine oils.

The present invention contributes an appreciable progress, not only in the development of lubricating agents capable of being employed over a wide pressure range, but also of detergent or emulsifying agents capable of being employed as additives for engine oils.

According to the present invention a process for the preparation of a polybutene having a thioether function comprises reacting together, under conditions in which free radicals are generated;
(A) an organic thiol and
(B) a liquid polybutene having one carbon-carbon double bond per molecule and a number average molecular weight of from 200 to 10,000.

The invention includes a polybutene having a thioether function obtainable by this process.

The polybutene used to obtain the new chemical product is a liquid polybutene prepared by polymerization of 1-butene or of cis and trans 2-butenes, or by copolymerization of 1-butene with cis and trans 2-butenes, especially with the aid of a catalyst of the cationic type. Good results are obtained when use is made of a polybutene prepared by polymerization of isobutene, or by copolymerization of isobutene with 1-butene and/or 2-butenes, with the aid of a catalyst of the cationic type, in particular of the Friedel-Crafts type, such as aluminium trichloride, boron trifluoride, tin or titanium tetrachloride, or a chlorinated organoaluminium derivative, optionally in the presence of a cocatalyst such as hydrochloric acid, tert-butyl chloride or water. The polybutene may be advantageously prepared by copolymerization of a mixture of olefins containing four carbon atoms, particularly a mixture comprising 30 to 90% by weight of isobutene and 10 to 70% by weight of 1-butene and 2-butenes.

The polybutene employed in the present invention must contain one carbon-carbon double bond per molecule, generally arranged at a chain end. The carbon-carbon double bond may be of a type which is either trisubstituted according to the formulae: 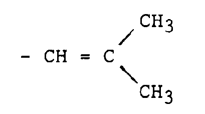
and 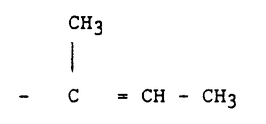
or tetrasubstituted according to the formula: 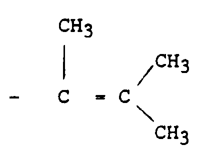
It may also be of the vinylidene type according to the formula:

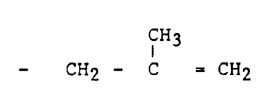

The polybutene used for preparing the polybutene having a thioether function according to the present invention may contain no carbon-carbon double bonds of the vinyl type. Vinyl type double bonds are known to be the most reactive.

The carbon-carbon double bonds which are present in the polybutene employed in the present invention are advantageously from 1 to 90%, preferably from 40 to 85% and more especially from 50 to 85% of the vinylidene type which are much less reactive than those of the vinyl type.

The polybutene which is suitable for the present invention has, furthermore, a number average molecular weight, measured by osmometry or by gel permeation chromatography, ranging from 200 to 10,000, preferably ranging from 330 to 5000, and more particularly ranging from 400 to 2500. The use of a polybutene of too low a molecular weight results in an addition product of relatively high volatility, while a polybutene of too high a molecular weight results in an addition reaction of low yield.

Thus, the polybutene employed may, on average, contain from 4 to 180, preferably from 6 to 90 and more particularly from 7 to 45 olefin-derived units per molecule. It may consequently contain from 16 to 720 carbon atoms, preferably from 24 to 360 carbon atoms and more particularly from 28 to 180 carbon atoms per molecule.

The polybutene may also have a viscosity ranging from 0.002 to 100 Pa s, preferably from 0.01 to 20 Pa s and more particularly from 0.05 to 5 Pa s at 100°C.

Moreover, the polybutene may have a relatively narrow molecular weight distribution, calculated according to the ratio of the weight average molecular weight, Mw, to the number average molecular weight, Mn, of the polymer. This distribution is between 1 and 5, and preferably between 1 and 3.

The polybutene used in the process of the present invention is a liquid. Liquid polybutenes are very different from the solid thermoplastic or elastomeric polybutenes having very high molecular weights.

By way of example, a polybutene sold by BP Chemicals (Great Britain) under the registered trade mark "Ultravis" Ⓡ may be employed.

According to the present invention, the organic thiol may be chosen from compounds corresponding to the general formula:

R-SH

in which R denotes:
- an alkyl radical containing from 1 to 20 carbon atoms, optionally substituted by one or more alkyl or aryl radicals, in particular a phenyl or naphthyl radical,
- or a pyridyl or pyrimidinyl radical,
- or an alkyl or aryl radical substituted by one or more hydroxyl groups: - OH,
- or an alkyl or aryl radical substituted by one or more carboxyl groups: -CO₂H,
- or an alkyl or aryl radical substituted by one or more ester groups of formula - CO₂R¹ in which R¹ denotes an alkyl radical containing from 1 to 6 carbon atoms or an aryl radical,
- or a group of formula

   -(CH₂)ₘ(OCHR²CH₂)ₙOR³

   in which R² denotes a hydrogen atom or a methyl radical, R³ denotes a hydrogen atom or an alkyl radical containing from 1 to 6 carbon atoms, m is an integer ranging from 1 to 6 and n is an integer ranging from 1 to 100,
- or a group of formula

   -(CH₂)ₚSi(R⁴)(R⁵)(R⁶)

   in which R⁴ and R⁵ are identical or different and denote a hydrogen atom or an alkyl or alkoxy radical, R⁶ denotes an alkyl or alkoxy radical and p is an integer ranging from 2 to 10.

The organic thiol may, in particular, be chosen from the following products:

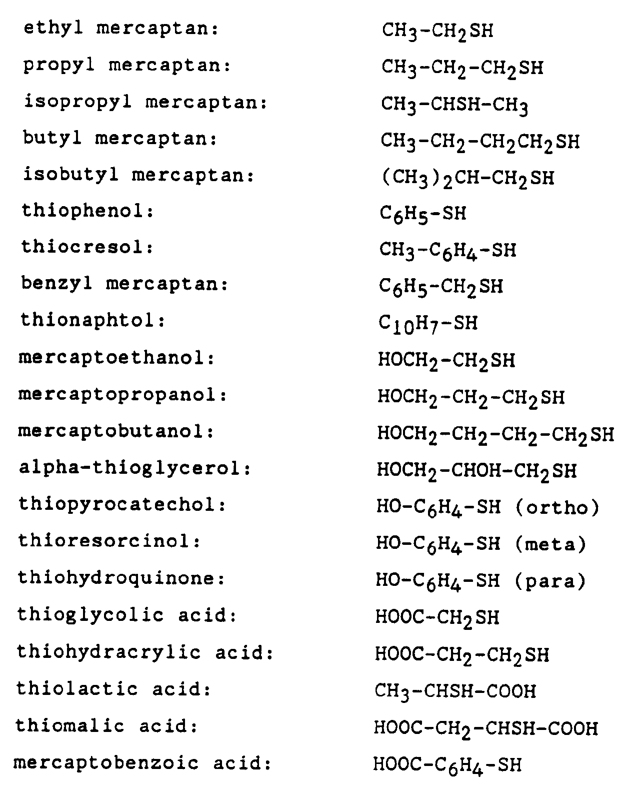

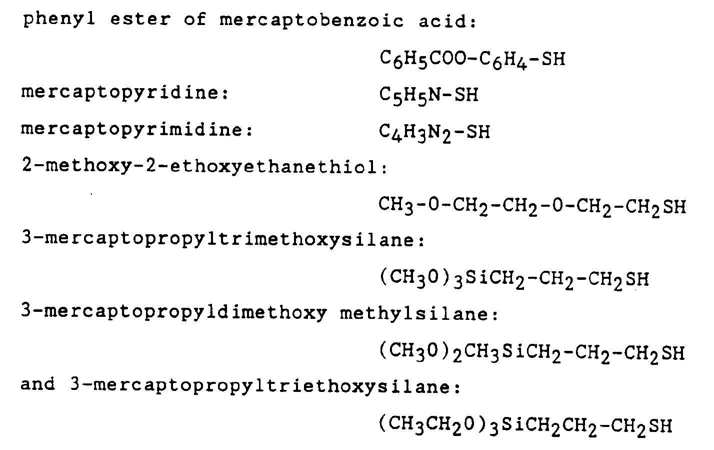

The polybutene having a thioether function is obtainable according to the present invention by an addition reaction between the organic thiol and polybutene, under conditions in which free radicals are generated. These conditions can be provided, for example, by the use of free radical generators or of ultraviolet radiation. The invention is based on the surprising discovery that, under these conditions, an organic thiol is capable of reacting with a polybutene which has a relatively high number average molecular weight and which contains one carbon-carbon double bond per molecule. Moreover, since the carbon-carbon double bond of the polybutene is not generally of the vinyl type, they are not considered to be highly reactive.

Furthermore, in contrast to olefins which are generally linear in structure, polybutene is characterized by a relatively branched structure, since it contains one or two ethyl or methyl branches per monomer unit. It is surprisingly found that, in the conditions of the present reaction, the relatively branched structure of polybutene does not give rise to a formation of many by-products through secondary radical reactions.

Free radical generators are well known and, by way of example, there may be mentioned peroxides such as dibenzoyl peroxide, dicyclohexyl peroxydicarbonate, tert-butyl perbenzoate, lauroyl peroxide, isobutyryl peroxide, tert-butyl peroxyacetate and dicumyl peroxide, or else compounds containing an azo group, such as azo-bisisobutyronitrile, or else oxygen, or a mixture of these products. It is also possible to employ photochemical methods using ultraviolet radiation, natural light, optionally in the presence of air or of oxygen. The choice between the photochemical method and the use of free radical generators depends on the nature of the reactants used, in particular on the nature of the organic thiol.

An important factor in the process for preparing the polybutene having a thioether function is the choice of the medium in which the addition reaction takes place. Surprisingly the addition reaction may be carried out without any solvent, that is to say in bulk in the liquid polybutene. Despite the relatively high viscosity of the medium, it is found that, with stirring, the addition reaction takes place with a satisfatory yield. The choice of the medium in which the addition reaction takes place depends on the nature of the polybutene and of the organic thiol. In certain cases the addition reaction may be performed in a solvent suitable for dissolving the polybutene and for raising the activity of the organic thiol. The solvent employed may be chosen from saturated hydrocarbons, aromatic hydrocarbons or halogenated hydrocarbons. For example, toluene, 1,2-dichloroethane or dichloromethane may be employed.

The temperature at which the organic thiol adds most advantageously to polybutene depends on the nature of the reactants, and on the choice of the free radical generators or of the photo-chemical method employed for generating free radicals and of the medium in which the reaction takes place. It is generally between -20°C and +200°C, and preferably between 0°C and 100°C. When the addition reaction takes place in the presence of a free radical generator, reaction temperature is related, in particular, to the decomposition temperature of this generator.

Another major factor in the process for preparing the polybutene having a thioether function is the molar proportion of the organic thiol relative to polybutene. It turns out that, despite the relatively high molecular weight of the polybutene and its branched structure, it is possible to use equimolar quantities of polybutene containing one carbon-carbon double bond per molecule and of an organic compound possessing the thiol group. This is one of the surprising features of the invention which produces a highly advantageous result, in that it is possible to add an organic thiol to a molecule of polybutene and thus to be able to functionalize the polybutene molecule. The addition reaction can be carried out with a molar excess of the organic thiol relative to the polybutene containing one carbon-carbon double bond per molecule.

The polybutene having a thioether function obtainable by an addition reaction between polybutene and the organic thiol is a thioether containing, on one side of the sulphur atom the polybutene characterized by a relatively long chain with a branched structure and, on the other side of the sulphur atom, the group R of the organic thiol. The polybutene having a thioether function can be employed as such in compositions for lubricants, detergents, emulsifiers or pesticides. The advantageous properties of the polybutene having a thioether function are chiefly linked with the particular structure of the thioether. In particular, the sulphur element present in the thioether group of the new chemical product of the present invention endows the latter with highly advantageous properties, especially in applications such as an engine oil operating under high pressure.

When, in addition to the -SH group, the organic thiol possesses another group capable of subsequently reacting with other products, the addition product may then be prepared as an intermediate product and may be employed to synthesize other molecules which will contain the thioether group. These new molecules may also be employed in compositions for lubricants, detergents, emulsifiers or pesticides.

Thus, by way of example, when the organic thiol additionally contains a hydroxyl group, the addition product obtained according to the present invention is, in this case, a thioether possessing a hydroxyl group capable of reacting in a subsequent stage with an alkylene oxide such as as ethylene oxide or propylene oxide. The result is that the addition product obtained in this way consists of a molecule containing a polybutene part and a polyoxyalkylene part on either side of the thio group. A product of this kind can be employed in a lubricating or emulsifying composition. The addition product possessing a hydroxyl group may also be employed to react with a compound containing an isocyanate group, such as methyl isocyanate. In this case, compounds containing a urethane group in addition to a thioether group are obtained. These compounds are capable of being employed in pesticide compositions.

Furthermore, when the organic thiol additionally contains an alkoxysilane group, the addtion product obtained according to the present invention may be used for modifying glass or the surface of glass.

The invention is further illustrated by the following examples.

### Example 1

0.062 g of azobisisobutyronitrile, 3.8095 g of an "Ultravis" Ⓡ polybutene sold by BP Chemicals (Great Britain), having a number average molecular weight of 930 and one carbon-carbon double bond per molecule, about 52% of which are of the vinylidene type, 0.969 g of mercaptopyrimidine and 20 ml of 1,2-dichloroethane, employed as a solvent, are introduced with stirring into a 100 ml glass round-bottomed flask. The reaction is carried out under an air stream, at a temperature of 90°C for 30 hours. At the end of this time, an orange viscous liquid is recovered. The solvent employed is removed by evaporation and a mixture containing the addition product and residual mercaptopyrimidine in solid form is obtained. 10 ml of toluene are added to this mixture and the addition product is recovered after separation of the residual mercaptopyrimidine by filtration and by evaporating off the toluene. The addition product is analysed by infra-red spectroscopy and it is found that it now contains hardly any carbon-carbon double bonds of the vinylidene type.

### Example 2

0.8733 g of "Ultravis" Ⓡ polybutene sold by BP Chemicals (Great Britain) which has a number average molecular weight of 930 and one carbon-carbon double bond per molecule, about 52% of which are of the vinylidene type, 0.1642 g of a compound of formula

CH₃-O-CH₂-CH₂-O-CH₂-CH₂SH

(2-methoxy-2-ethoxyethanethiol) and 2 ml of dichloromethane, employed as a solvent, are introduced with stirring into a 20 ml quartz round-bottomed flask. The mixture thus obtained is subjected at ambient temperature (20°C) to an irradiation with ultraviolet radiation. After 12 hours' irradiation the solvent employed is removed by evaporation and a liquid, highly viscous, transparent and yellow-coloured addition product is obtained. This addition product is analysed by infra-red spectroscopy and by proton nuclear magnetic resonance spectrometry and it is found that it now contains hardly any carbon-carbon double bonds of the vinylidene type.

### Example 3

5.118 g of a "Ultravis" Ⓡ polybutene sold by BP Chemicals (Great Britain) which has a number average molecular weight of 930 and one carbon-carbon double bond per molecule, about 52% of which are of the vinylidene type, 0.662 g of thioglycolic acid (HSCH₂COOH), 0.0283 g of azobisisobutyronitrile and 4 ml of toluene, employed as a solvent, are introduced with stirring into a 100 ml glass round-bottomed flask. The reaction is carried out under an air stream, at a temperature of 80°C for 50 hours. At the end of this time the reaction mixture is cooled to ambient temperature (20°C). After removal of the solvent employed by evaporation, a highly viscous, transparent and yellow-coloured liquid is obtained. This liquid is analysed by infra-red spectroscopy and by proton nuclear magnetic resonance spectrometry, and it is found that it now contains hardly any carbon-carbon double bonds of the vinylidene type.

### Example 4

15.5 g of an "Ultravis" Ⓡ polybutene sold by BP Chemicals (Great Britain) which has a number average molecular weight of 930 and one carbon-carbon double bond per molecule, about 52% of which are of the vinylidene type, 1.83 g of mercaptoethanol (HSCH₂CH₂OH) and 6 ml of toluene, as a solvent, are introduced into a 50 ml quartz round-bottomed flask. The mixture obtained is subjected at ambient temperature (20°C) to an irradiation with ultraviolet radiation. After 14 hours' irradiation the solvent employed and the residual mercaptoethanol are evaporated off, and then an addition product is recovered, which is in the form of a highly viscous transparent and yellow-coloured liquid. This addition product is analysed by infra-red spectroscopy and by nuclear magnetic resonance spectrometry and it is found that carbon-carbon double bonds of the vinylidene type have disappeared practically completely.

### Example 5

5.2136 g of an "Ultravis" Ⓡ polybutene sold by BP Chemicals (Great Britain) which has a number average molecular weight of 930 g and one carbon-carbon double bond per molecule, about 52% of which are of the vinylidene type, 1.115 g of mercaptoethanol (HSCH₂CH₂OH) and 5 ml of toluene employed as a solvent are introduced with stirring into a 50 ml glass round-bottomed flask. The addition reaction is carried out under an air stream, at a temperature of 70°C for 20 hours. At the end of this time the reaction mixture is cooled to ambient temperture (20°C). After evaportion of the solvent empolyed and of the residual mercaptoethanol, a highly viscous, transparent and yellow-coloured liquid is recovered. this liquid is analysed by infra-red spectroscopy and it is found, on the one hand, that it now contains hardly any carbon-carbon double bonds of the vinylidene type and, on the other hand, that it contains hydroxyl groups.

### Example 6

This example is intended to show a use of the polybutene having a thioether function produced according to the present invention. 100 g of an addition product obtained according to Example 4, 200 g of isoctane, as a solvent, and 0.02 mole of potassium hydroxide are introduced into a one-litre stainless steel reactor equipped with stirring system rotating at 200 revolutions per minute and a heating and cooling device. The reactor is then heated to 100°C for one hour. After returning to ambient temperature (20°C) by the application of vacuum, the solvent and all the water present in the reactor are evaporated off. After this evaporation stage, 200 g of perfectly anhydrous isooctane are added to the reator as a solvent. The reactor is then placed under a nitrogen atmosphere and is heated to 150°C, and 120 g of ethylene oxide are introduced into it in the course of 4 hours so that the temperature of the reaction medium does not exceed 153°C. At the end of this time, the reactor is cooled to ambient temperature (20°C) and the gaseous phase present in the reator, consisting chiefly of nitrogen, is removed. the final product is isolated after evaporation of the isooctane and treatment with 2% by weight of a magnesium silicate sold under the trademark "Ambosol" Ⓡ by Hoechst (Federal Republic of Germany), this treatment being performed with the objective of removing the catalyst residues. The product thus obtained can be employed in a lubricating or emulsifying composition.

### Example 7

5.15 g of "Ultravis" Ⓡ polybutene sold by BP Chemicals (Great Britain) which has a number average molecular weight of 1000 and one carbon-carbon double bond per molecule, about 84% of which are of the vinylidene type, 1 ml of a compound of formula.

(CH₃O)₃SiCH₂-CH₂-CH₂SH

(3-mercaptopropyltrimethoxysilane) and 8 ml of toluene, employed as a solvent, are introduced with stirring into a quartz round-bottomed flask. The mixture thus obtained is subjected at ambient temperature (20°C) to irradiation with ultra-violet radiation. After 14 hours irradiation the solvent employed is removed by evaporation and an addition product is obtained.

The addition product is analysed by infra-red spectroscopy and by proton nuclear magnetic resonance spectrometry. It is found that it now contains hardly any carbon-carbon double bonds of the vinylidene type, and that it contains groups of formula: CH₂-S-CH₂ and Si(OCH₃)₃

### Example 8

4.95 g of "Ultravis" Ⓡ polybutene sold by BP Chemicals (Great Britain) which has a number average molecular weight of 1000 and one carbon-carbon double bond per molecule, about 84% of which are of the vinylidene type, 0.6 ml of a compound of formula.

(CH₃O)₂CH₃SiCH₂-CH₂-CH₂SH

(3-mercaptopropyldimethoxymethylsilane) and 5 ml of toluene, employed as a solvent, are introduced with stirring into a quartz round-bottomed flask. The mixture thus obtained is subjected at ambient temperature (20°C) to an irradiation with ultra-violet radiation. After 17 hours' irradiation the solvent employed is removed by evaporation and an addition product is obtained.

The addition product is analysed by infra-red spectroscopy and by proton nuclear magnetic resonance spectrometry. It is found that it now contains less than 50% of the carbon-carbon double bonds of the vinylidene type, and that it contains groups of formula: S-CH₂-CH₂-CH₂-Si and CH₃-Si

### Example 9

5.35 g of "Ultravis" Ⓡ polybutene sold by BP Chemicals (Great Britain) which has a number average molecular weight of 1000 and one carbon-carbon double bond per molecule, about 84% of which are of the vinylidene type, 0.5 ml of a compound of formula.

(CH₃CH₂O)₃SiCH₂-CH₂-CH₂SH

(3-mercaptopropyltriethoxysilane), 6 x 10⁻⁵ mol of azobisisobutyronitrile and 8 ml of toluene, employed as a solvent, are introduced with stirring into a glass round-bottomed flask. The reaction is carried out under an air stream, at a temperature of 60°C for 44 hours. At the end of this time, 0.46 ml of 3-mercaptopropyltriethoxysilane are introduced with stirring into the mixture. The reaction is carried on under the same conditions for 74 hours. At the end of this time, the reaction mixture is cooled to ambient temperature (20°C). After removal of the solvent employed by evaporation, the addition product is obtained.

The addition product is analysed by infra-red spectroscopy and by proton nuclear magnetic resonance spectrometry. It is found that it now contains hardly any carbon-carbon double bonds of the vinylidene type, and that it contains bonds of formula:

Si-O-C

## Claims

1. A process for the preparation of a polybutene having a thioether function comprising reacting together, under conditions in which free radicals are generated;
(A) an organic thiol and
(B) a liquid polybutene having one carbon-carbon double bond per molecule and a number average molecular weight of from 200 to 10,000.

2. A process as claimed in claim 1 in which the polybutene has a number average mlecular weight of from 330 to 5000.

3. A process as claimed in claim 1 or claim 2 in which from 40 to 85% of the carbon-carbon double bonds present in the polybutene are of the vinylidene type.

4. A process as claimed in any one of claims 1 to 3 in which the organic thiol has the general formula R-SH in which R represents;
(a) an alkyl radical containing from 1 to 20 carbon atoms which is unsubstitured or substituted by one or more alkyl or aryl radicals
(b) a pyridyl or pyrimidinyl radical
(c) an alkyl or aryl radical substituted by one or more hydroxyl groups
(d) an alkyl or aryl radical substituted by one or more carboxyl groups
(e) an alkyl or aryl radical substituted by by one or more ester groups of formula - CO₂R¹ in which R¹ represents an alkyl radical containing from 1 to 6 carbon atoms or an aryl radical
(f) a group of formula
-(CH₂)ₘ (OCH R²CH₂)ₙ OR³
in which R² represents a hydrogen atom or a methyl radical, R³ represents a hydrogen atom or an alkyl radical containing from 1 to 6 carbon atoms, m is an integer from 1 to 6 and n is an integer from 1 to 100 or
(g) a group of formula
-(CH₂)p Si (R⁴)(R⁵)(R⁶)
in which R⁴ and R⁵ are the same or different and represent a hydrogen atom or an alkyl or alkoxy radical, R⁶ represents an alkyl or alkoxy radical and p is an integer of from 2 to 10.

5. A process as claimed in any one of claims 1 to 4 in which the reaction is carried out in the absence of a solvent.

6. A process as claimed in any one of claims 1 to 4 in which the reaction is carried out in the presence of a solvent selected from saturated hydrocarbons, aromatic hydrocarbons and halogenated hydrocarbons.

7. A process as claimed in any one of claims 1 to 6 in which at least an equimolar quantity of organic thiol is used relative to the amount of polybutene.

8. A polybutene having a thioether function obtainable by a process as claimed in any one of claims 1 to 7.

9. The use of a polybutene having a thioether function as claimed in claim 8 in compositions for, or as an intermediate product for, manufacturing, lubricants, detergents, emulsifiers, pesticides or agents for modifying glass or the surface of glass.

10. The use of a polybutene having a thioether function, produced according to the process of claim 4 in which the organic thiol has the general formula R-SH in which R is an alkyl or aryl radical substituted by one or more hydroxyl groups, to form a reaction product by reaction with an alkylene oxide or a compound containing an isocyanate group.

## Patentansprüche

1. Verfahren zur Herstellung von Thioether-Funktion enthaltendem Polybuten, umfassend das Miteinanderreagieren unter Bedingungen, bei welchen freie Radikale erzeugt werden, von:
(A) einem organischen Thiol und
(B) einem flüssigen Polybuten, das eine Kohlenstoff-Kohlenstoff-Doppelbindung pro Molekül und ein Zahlenmittel-Molekulargewicht von 200 bis 10 000 aufweist.

2. Verfahren nach Anspruch 1, in welchem das Polybuten ein Zahlenmittel-Molekulargewicht von 330 bis 5000 aufweist.

3. Verfahren nach Anspruch 1 oder Anspruch 2, in welchem von 40 bis 85 % der in dem Polybuten vorhandenen Kohlenstoff-Kohlenstoff-Doppelbindungen vom Vinyliden-Typ sind.

4. Verfahren nach einem der Ansprüche 1 bis 3, in welchem das organische Thiol die allgemeine Formel R-SH besitzt, in welcher R bedeutet:
(a) einen Alkylrest, enthaltend von 1 bis 20 Kohlenstoffatome, der unsubstituiert oder durch ein oder mehrere Alkyl- oder Arylreste substituiert ist,
(b) einen Pyridyl- oder Pyrimidinylrest,
(c) einen Alkyl- oder Arylrest, substituiert durch eine oder mehrere Hydroxyl-Gruppen,
(d) einen Alkyl- oder Arylrest, substituiert durch eine oder mehrere Carboxyl-Gruppen,
(e) einen Alkyl- oder Arylrest, substituiert durch eine oder mehrere Ester-Gruppen der Formel -CO₂R¹, in welcher R¹ einen Alkylrest mit 1 bis 6 Kohlenstoffatomen oder einen Arylrest bedeutet,
(f) eine Gruppe der Formel
-(CH₂)ₘ(OCHR²CH₂)ₙOR³
in welcher R² ein Wasserstoffatom oder einen Methylrest bedeutet, R³ ein Wasserstoffatom oder ein Alkylrest mit 1 bis 6 Kohlenstoffatomen ist, m eine ganze Zahl von 1 bis 6 und n eine ganze Zahl von 1 bis 100 bedeutet, oder
(g) eine Gruppe der Formel
-(CH₂)ₚSi(R⁴)(R⁵)(R⁶)
ist, in welcher R⁴ und R⁵ gleich oder verschieden sind und ein Wasserstoffatom oder einen Alkyl- oder Alkoxyrest bedeuten, R⁶ ein Alkyl- oder Alkoxyrest ist und p eine ganze Zahl mit einem Wert von 2 bis 10 bedeutet.

5. Verfahren nach einem der Ansprüche 1 bis 4, in welchem die Reaktion in Abwesenheit eines Lösungsmittels durchgeführt wird.

6. Verfahren nach einem der Ansprüche 1 bis 4, in welchem die Reaktion in Gegenwart eines Lösungsmitels, ausgewählt aus gesättigten Kohlenwasserstoffen, aromatischen Kohlenwasserstoffen und halogenierten Kohlenwasserstoffen, durchgeführt wird.

7. Verfahren nach einem der Ansprüche 1 bis 6, in welchem zumindest eine äquimolare Menge von organischem Thiol bezüglich der Menge an Polybuten eingesetzt wird.

8. Polybuten mit einer Thioether-Funktion, erhältlich durch ein Verfahren gemäß einem der Ansprüche 1 bis 7.

9. Verwendung eines Polybutens mit einer Thioether-Funktion gemäß Anspruch 8 in Zusammensetzungen für Schmierstoffe, Detergentien, Emulgiermittel, Pesticide oder Mittel zur Modifizierung von Glas oder der Oberfläche von Glas, oder Verwendung als Zwischenprodukt für die Fertigung der vorstehenden Stoffe und Mittel.

10. Verwendung eines Polybutens mit einer Thioether-Funktion, hergestellt gemäß dem Verfahren von Anspruch 4, in welchem das organische Thiol die allgemeine Formel R-SH besitzt, worin R einen Alkyl- oder Arylrest, substituiert durch eine oder mehrere Hydroxyl-Gruppen, bedeutet, zur Bildung eines Reaktionsproduktes durch Umsetzung mit einem Alkylenoxid oder einer eine Isocyanat-Gruppe enthaltenden Verbindung.

## Revendications

1. Procédé de préparation d'un polybutène à fonction thioéther **consistant à faire réagir ensemble, dans des conditions dans lesquuelles des radicaux libres sont engendrés:**
(A) un thiol organique et
(B) un polybutène liquide ayant une double liaison carbone-carbone par molécule et un poids moléculaire moyen en nombre de 200 à 10 000.

2. Procédé selon la revendication 1, dans lequel le polybutène a un poids moléculaire moyen en nombre de 330 à 5 000.

3. Procédé selon la revendication 1 ou 2, dans lequel de 40 à 85% des doubles liaisons carbone-carbone présentes dans le polybutène sont du type vinylidène.

4. Procédé selon l'une quelconque des revendications 1 à 3, dans lequel le thiol organique a la formule générale R-SH dans laquelle R représente;
(a) un radical alkyle contenant de 1 à 20 atomes de carbone qui est substitué ou non-substitué par un ou plusieurs radicaux alkyle ou aryle
(b) un radical pyridyle ou pyrimidinyle
(c) un radical alkyle ou aryle substitué par un ou plusieurs groupes hydroxyle
(d) un radical alkyle ou aryle substitué par un ou plusieurs groupes carboxyle
(e) un radical alkyle ou aryle substitué par un ou plusieurs groupes ester de formule - CO₂R¹ dans laquelle R¹ représente un radical alkyle contenant de 1 à 6 atomes de carbone ou un radical aryle
(f) un groupe de formule
-(CH₂)ₘ (OCH R²CH₂)ₙ OR³
dans laquelle R² représente un atome d'hydrogène ou un radical méthyle, R³ représente un atome d'hydrogène ou un radical alkyle contenant de 1 à 6 atomes de carbone, m est un nombre entier de 1 à 6 et n est un nombre entier de 1 à 100, ou
(g) un groupe de formule
-(CH₂)ₚ Si (R⁴) (R⁵) (R⁶)
**dans lequel R⁴** **et R⁵sont identiques ou différents et** représentent un atome d'hydrogène ou un radical alkyle ou alkoxy, R⁶ représente un radical alkyle ou alkoxy et p est un nombre entier de 2 à 10.

5. Procédé selon l'une quelconque des revendications 1 à 4, dans lequel la réaction est réalisée en l'absence de solvant.

6. Procédé selon l'une quelconque des revendications 1 à 4, dans lequel la réaction est réalisée en présence d'un solvant choisi parmi les hydrocarbures saturés, les hydrocarbures aromatiques et les hydrocarbures halogénés.

7. Procédé selon l'une quelconque des revendications 1 à 6, dans lequel au moins une quantité équimolaire de thiol organique est utilisée par rapport à la quantité de polybutène.

8. Polybutène ayant une fonction thioéther que l'on peut obtenir au moyen d'un procédé selon l'une quelconque des revendications 1 à 7.

9. Utilisation d'un polybutène ayant une fonction thioéther selon la revendication 8 dans des compositions pour, ou comme produit intermédiaire pour, la fabrication, des lubrifiants, des détergents, des émulsifiants, des pesticides ou des agents pour modifier le verre ou la surface du verre.

10. Utilisation d'un polybutène ayant une fonction thioéther, produit selon le procédé de la revendication 4, dans laquelle le thiol organique a la formule générale R-SH dans laquelle R est un radical alkyle ou aryle substitué par un ou plusieurs groupes hydroxyle, pour former un produit réactionnel par réaction avec un oxyde d'alkylène ou un composé contenant un groupe isocyanate.
